# EUROPÄISCHE PATENTANMELDUNG

(11) **EP 2 308 653 A2**
(43) Veröffentlichungstag der Anmeldung: **13.04.2011**
(21) Anmeldenummer: 10013463.4
(22) Anmeldetag: 08.10.2010
(51) Int. Cl.: B25G 1/01

(54) **Schaufelanordnung**

(30) Priorität: 08.10.2009 DE 102009048749; 13.02.2010 DE 102010007907
(71) Anmelder: Haller, Hans-Peter, 39040 Ratschings (IT)
(72) Erfinder: Haller, Hans-Peter, 39040 Ratschings (IT)
(74) Vertreter: von Puttkamer · Berngruber

(57) **Zusammenfassung**

Die Erfindung betrifft eine Schaufelanordnung mit einem Schaufelblatt (2) und einem Schaufelstiel (3), in dem eine Feder- und Dämpfungseinrichtung (4) angeordnet ist. Der Schaufelstiel (3) umfasst ein dem Schaufelblatt (2) zugewandtes Stielteil (6) und ein dem Schaufelteil (3) abgewandtes Stielteil (7), wobei die Feder- und Dämpfungseinrichtung (4) zwischen den aneinander zugewandten Seiten des dem Schaufelblatt (2) zugewandten Stielteiles (6) und des dem Schaufelblatt (2) abgewandten Stielteiles (7) angeordnet ist. Die Feder- und Dämpfungseinrichtung (4) ermöglicht federnde Auslenkungen des dem Schaufelblatt (2) zugewandten Stielteiles (6) und des daran befestigten Schaufelblattes (2) vorwiegend in Richtungen (9, 10) senkrecht zur Ebene des Schaufelblattes (2).

## Beschreibung

Die vorliegende Erfindung betrifft eine Schaufelanordnung.

Aus der GB 23 71 513 A geht ein Spaten mit einer Feder- und Dämpfungseinrichtung hervor, die in dem Stiel des Spatens angeordnet ist und Stöße dämpft, die in Längsrichtung des Schaufelstieles auftreten. Durch einen derart ausgebildeten Spaten sollen dann, wenn auf den Spaten eine extrem große Kraft, beispielsweise beim Graben von Löchern, ausgeübt wird, Verletzungen verhindert werden, wenn das Spatenblatt auf einen harten Gegenstand, beispielsweise auf einen größeren Stein oder dergleichen, trifft. Derartige Verletzungen betreffen den Ellenbogen oder die Schulter und führen zu Arbeitsausfällen.

Die Aufgabe der vorliegenden Erfindung besteht darin, eine Schaufelanordnung so auszugestalten, dass ein Benutzer der Schaufelanordnung kraftsparender und auch effektiver arbeiten kann.

Diese Aufgabe wird durch eine Schaufelanordnung gelöst, die ein Schaufelblatt und einen Schaufelstiel aufweist, in dem eine Feder- und Dämpfungseinrichtung angeordnet ist. Der Schaufelstiel umfasst ein dem Schaufelblatt zugewandtes Stielteil und ein dem Schaufelteil abgewandtes Stiel teil. Die Feder- und Dämpfungseinrichtung ist zwischen den aneinander zugewandten Seiten des dem Schaufelblatt zugewandten Stielteiles und des dem Schaufelblatt abgewandten Stielteiles angeordnet. Die Feder- und Dämpfungseinrichtung ist erfindungsgemäß so beschaffen, dass sie federnde Auslenkungen des dem Schaufelblatt zugewandten Stielteiles und des daran befestigten Schaufelblattes ermöglicht, die im wesentlichen in Richtungen senkrecht zur Ebene des Schaufelblattes verlaufen.

Ein wesentlicher Vorteil der vorliegenden Erfindung besteht darin, dass durch die vorliegende Schaufelanordnung ein kraftsparendes Arbeiten ermöglicht wird. Dies ist auf das Feder- und Dämpfungsglied zurückzuführen, das im Stielteil angeordnet ist.

Ein weiterer wesentlicher Vorteil besteht darin, dass beim Arbeiten mit der erfindungsgemäßen Schaufelanordnung schädliche Krafteinwirkungen, die beispielsweise dann entstehen, wenn das Schaufelblatt auf ein festes Hindernis, beispielsweise auf einen Stein oder dergleichen, auftrifft, verhindert werden. Dadurch wird ein schonendes und angenehmes Arbeiten gewährleistet. Verletzungen, die auf die genannten Krafteinwirkungen zurückzuführen sind, werden vermieden. Somit werden auch Arbeitsausfälle verhindert.

Eine besonders effektive Dämpfung lässt sich erreichen, wenn die Feder- und Dämpfungseinrichtung ein Blattfederteil umfasst, das zwischen dem, dem Schaufelblatt zugewandten Stielteil und dem, dem Schaufelteil abgewandten Stielteil angeordnet ist, wobei die Ebene des Blattfederteiles im wesentlichen parallel zur Ebene des Schaufelblattes verläuft.

Eine weitere bevorzugte Ausführungsform der Schaufelanordnung ist **dadurch gekennzeichnet, dass** die Feder- und Dämpfungseinrichtung aus einem Blattfederteil besteht, das vorzugsweise mehrere Federn umfasst.

Dabei ist das Blattfederteil besonders bevorzugt mit seiner dem Schaufelblatt zugewandten Seite an einem ersten Hülsenteil befestigt und die dem Schaufelteil abgewandte Seite des Blattfederteiles ist an einem zweiten Hülsenteil befestigt. Das erste Hülsenteil ist hierbei an dem, dem Schaufelblatt zugewandten Stielteil und das zweite Hülsenteil ist an dem Schaufelblatt abgewandten Stielteil montierbar. Eine derart ausgestaltete Befestigungseinrichtung kann besonders einfach und dauerhaft an den jeweiligen Stielteilen befestigt werden.

Das erste Hülsenteil ist vorzugsweise derart an den Querschnitt des dem Schaufelblatt zugewandten Stielteiles angepasst, dass es auf den ihm zugewandten Endbereich des dem Schaufelblatt zugewandten Stielteiles aufschiebbar ist. Entsprechend ist das zweite Hülsenteil vorzugsweise derart an den Querschnitt des dem Schaufelblatt abgewandten Stielteiles angepasst, dass es auf den ihm zugewandten Endbereich des dem Schaufelblatt abgewandten Stielteiles aufschiebbar ist. Um eine einfache und schnelle Befestigung zu ermöglichen, weisen das erste Hülsenteil und/oder das zweite Hülsenteil jeweils wenigstens ein Loch zum Einführen einer Schraube auf, mit der es an dem, dem Schaufelblatt zugewandten Stielteil befestigbar ist. Anstelle der Hülsenteile können an den Enden des Blattfederteiles auch Zapfenteile angeordnet sein, die in entsprechende Bohrungen der Stielteile eingesteckt werden.

Das Blattfederteil besteht zweckmäßigerweise aus einem Federstahlmaterial besteht und das erste und/oder zweite Hülsenteil bestehen zweckmäßigerweise aus einem Stahlmaterial, wobei die Hülsenteile an dem Blattfederteil verschweißt sein können.

In einer bevorzugten Ausführungsform der Schaufelanordnung sind die Blattfedern seitlich im Bereich der Hülsen eingeschlitzt. Vorzugsweise sind die Blattfedern über die Schlitze mit den Hülsen verschweißt.

Eine weitere bevorzugte Ausführungsform der Schaufelanordnung ist **dadurch gekennzeichnet, dass** das Federelement zusammen mit dem, dem Schaufelblatt zugewandten Teil einstückig ist.

Bei einer anderen Ausgestaltung der erfindungsgemäßen Schaufelanordnung wird die Feder- und Dämpfungseinrichtung nicht durch ein Blattfederteil, sondern durch ein elastisches Materialteil gebildet, das vorzugsweise die Form eines insbesondere zylindrischen Hartgummiteiles aufweist. In diesem Materialteil können zur Bestimmung der Dämpfungseigenschaften Verstärkungselemente angeordnet sein.

Bei der zuvor beschrieben Erfindung sind die Höhe und Weite des geworfenen Materials ein entscheidender Faktor. Die Höhe und Weite des geworfenen Materials wird insbesondere durch die Verwendung eines Blattfederteils als Feder- und Dämpfungseinrichtung positiv beeinflusst.

Durch die erfindungsgemäße Schaufelanordnung wird beispielsweise eine Verbesserung der Wurfweite um bis zu 36 % und eine Verbesserung der Wurfhöhe um bis zu 85 % erreicht. Bei Versuchen wurde festgestellt das bei der Benutzung einer herkömmlichen Schaufel in etwa 30 J (Joule) an kinetischer Energie nötig sind, wobei bei der entsprechenden Verwendung der erfindungsgemäßen Schaufelanordnung nur 22,5 J nötig waren. Durch die erfindungsgemäße Schaufelanordnung ist bei gleicher Wurfweite und Wurfhöhe eine Krafterleichterung von bis zu 30 % erreichbar.

Zusätzlich wird bei der Verwendung der erfindungsgemäßen Schaufelanordnung eine starke Verdrehung des Oberkörpers beim Auswerfen des Schüttgutes vermieden.

Im Folgenden werden die Erfindung und deren Ausgestaltungen im Zusammenhang mit den Figuren näher erläutert.

Es zeigen:
- Figur 1: eine perspektivische Darstellung der erfindungsgemäßen Schaufelanordnung,
- Figur 2: eine Seitenansicht der erfindungsgemäßen Schaufelanordnung gemäß Figur 1 zur Erläuterung der Wirkung der Feder- und Dämpfungseinrichtung,
- Figur 3: eine perspektivische Darstellung einer bevorzugten Feder- und Dämpfungseinrichtung, und
- Figuren 4 bis 6: Weiterbildungen der Erfindung.

Zu der Erfindung führten die folgenden Überlegungen. Beim Arbeiten mit einer Schaufel wirken, im Gegensatz zum Arbeiten mit einem Spaten, auf das Schaufelblatt der Schaufel Kräfte ein, die auf das Gewicht des auf dem Schaufelblatt angeordneten Materials (z. B. Steine, Sand oder Erdreich) sowie auf die vom Benutzer beim Anheben der Schaufel aufgebrachten Kräfte zum Bewegen der Schaufel zurückzuführen sind. Diese durch das genannte Gewicht sowie auf die genannte Bewegung der Schaufel zurückzuführende Kräfte können durch eine spezielle Feder- und Dämpfungseinrichtung begrenzt werden, die eine federnde- und dämpfende Wirkung derjenigen Kräfte bewirkt, die im wesentlichen senkrecht zur Oberfläche des Schaufelblattes gerichtet sind.

Beim Schaufeln, Graben, seitlichen Räumen und insbesondere beim Auswerfen von Schaufelgut erfolgt dann eine Rückfederung, wobei sich die Feder der Feder- und Dämpfungseinrichtung spannt, und bei der Wurfbewegung bewirkt die vorgespannte Feder dass das Wurfgut kraftschonender und auch weiter geworfen werden kann.

Hierbei wird also die Federkraft ausgenutzt. Dabei werden eine körperliche Krafteinsparung, eine ergonomische Optimierung der Schaufelarbeit sowie eine Schonung von Muskeln und Gelenken erreicht. Insbesondere können Hebe- und Raumarbeiten vom Benutzer der Schaufel schonend und kräftesparend ausgeführt werden. Dies gilt auch für Arbeiten, bei denen das Schaufelblatt seitlich bewegt wird, beispielsweise wenn Kies oder dergleichen auf einem Untergrund seitlich verschoben wird.

Ebenso können mit einer solchen speziellen Feder- und Dämpfungseinrichtung Kräfte begrenzt werden, die beim seitlichen Wegkippen des Schaufelblattes entstehen.

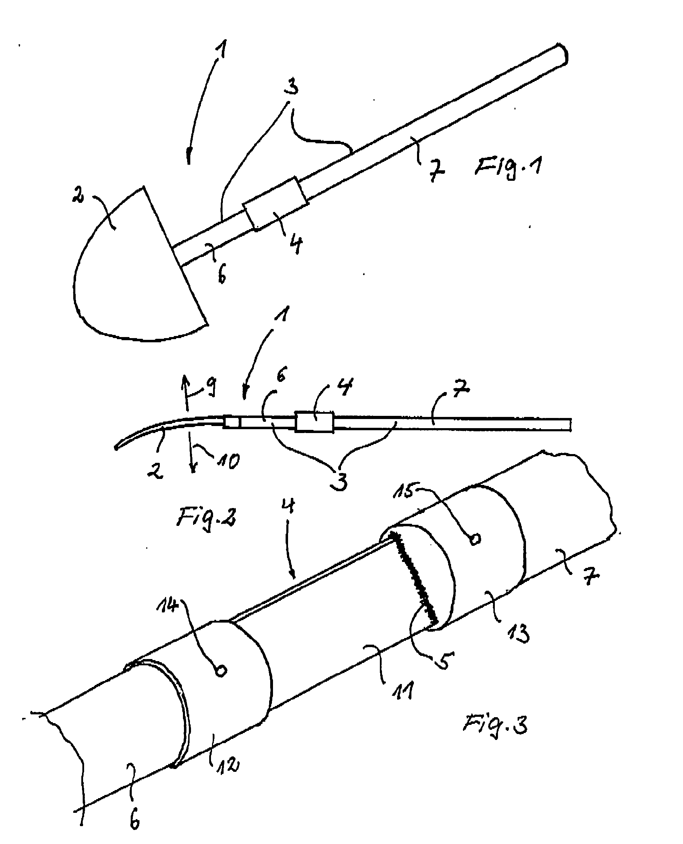

In der Figur 1 sind ein Schaufelblatt einer vorliegenden Schaufelanordnung 1 mit 2 und ein Schaufelstiel dieser Schaufelanordnung 1 mit 3 bezeichnet. Dabei ist erfindungsgemäß im Schaufelstiel 3 an der dem Schaufelblatt 2 zugewandten Seite eine Feder- und Dämpfungseinrichtung 4 angeordnet, die den Schaufelstiel 3 in ein dem Schaufelblatt 2 zugewandtes Stielteil 6 und ein dem Schaufelblatt 2 abgewandtes Stielteil 7 unterteilt. Das Dämpfungsglied 4 ist allgemein gesagt so ausgebildet, dass es eine federnde Auslenkung des Stielteiles 6 und des daran in üblicher Weise befestigten Schaufelblattes 2 senkrecht zur Oberfläche des Schaufelblattes 2 zulasst, wenn die auf das Schaufelblatt 2 einwirkenden Kräfte eine vorbestimmte Größe überschreiten. Die in der Figur 2 dargestellten Pfeile 9 und 10 zeigen die Wirkuigsrichtung der Feder- und Dämpfungseinrichtung 4 an.

Im Folgenden wird im Zusammenhang mit der Figur 3 eine bevorzugte Ausgestaltung der Feder- und Dämpfungseinrichtung 4 näher erläutert. Andere Ausführungsformen der Feder- und Dämpfungseinrichtung 4 sind jedoch denkbar, sofern sie die in der Figur 2 gezeigte federnde Auslenkung des Stielteiles 6 mit dem daran befestigten Schaufelblatt 2 gegenüber dem Stielteil 7 in den Richtungen 9, 10 ermöglichen.

Bei der bevorzugten Ausgestaltung weist die Feder- und Dämpfungseinrichtung 4 gemäß Figur 3 ein Blattfederteil 11 auf, an dessen Enden jeweils ein Hülsenteil 12 bzw. 13 befestigt ist. Vorzugsweise besteht das Blattteil 11 aus einem Federstahlmaterial, wobei die zweckmäßiger Weise aus Stahl bestehenden Hülsenteile 12 bzw. 13 an dem Blattteil 4 verschweißt sind, wie dies schematisch durch eine Schweißnaht 5 dargestellt ist. Die Schweißnaht 5 kann auch an einer anderen alternativen Stelle zwischen dem Blattteil und der Hülse 12 bzw. 13 angebracht sein.

Die Hülsenteile 12 bzw. 13 weisen zweckmäßiger Weise jeweils eine dem Querschnitt der Stielteile 6 bzw. 7 angepasste Ringform auf, sodass sie einfach über die ihnen zugewandten Endbereiche der Stielteile 6 bzw. 7 geschoben und beispielsweise durch Verschrauben befestigt werden können. Zu diesem Zweck weisen die Hülsenteile 12 bzw. 13 vorzugsweise jeweils wenigstens ein Loch 14 bzw. 15 auf, durch das eine Schraube (nicht dargestellt) führbar und z. B. in dem Holzmaterial der Stielteile 12 bzw. 13 verschraubbar ist. Andere Befestigungsmöglichkeiten sind denkbar. Beispielsweise kann das Blattfederteil 11 an seinen Enden Zapfenteile besitzen, die in entsprechende Bohrungen eingesetzt werden, die sich in den dem Blattfederteil 11 zugewandten Enden der Stielteile 6, 7 befinden.

Wie oben bereits ausgeführt, kann die Feder- und Dämpfungseinrichtung 4 auch andere Formen aufweisen. Beispielsweise ist es denkbar, zwischen den Hülsenteilen 11 und 13 ein insbesondere zylindrisches Materialteil anzuordnen, das die gewünschten Auslenkungen in den Richtungen 9 und 10 zulässt. Beispielsweise kann ein solches Materialteil aus Hartgummi oder dergleichen bestehen, in dem entsprechende Verstärkungselemente vorgesehen sein können. Die entsprechenden Enden des Hartgummiteiles können dabei auf die Enden der Stielteile 6, 7 aufvulkanisiert sein. Bei einer derartigen Ausgestaltung der Feder- und Dämpfungseinrichtung 4 ist eine Feder- und Dämpfungswirkung in jede Richtung gewährleistet. Der Durchmesser des Materialteiles kann an denjenigen des Schaufelteiles angepasst sein.

Allgemein gesagt wird die Feder- und Dämpfungseinrichtung an einer Stelle des Schaufelstiels 3 eingebaut, die für die beste Hebelwirkung geeignet ist.

Es wird darauf hingewiesen, dass die vorliegende Erfindung in ihrer allgemeinsten Form eine Schaufelanordnung mit einer Dämpfungseinrichtung 4 betrifft, die federnde Auslenkungen des Schaufelblattes 2 in Bezug auf den Schaufelstiel 3 ermöglicht, wobei die federnden Auslenkungen vorwiegend in Richtungen senkrecht zur Ebene des Schaufelblattes verlaufen.

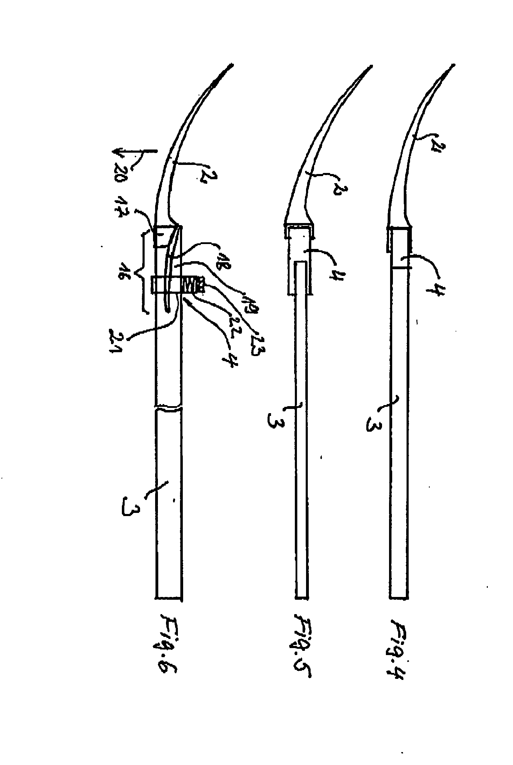

Beispielsweise ist auch eine Ausführungsform denkbar, bei der die Feder- und Dämpfungseinrichtung 4 entgegen der bisher beschriebenen Ausführungsform direkt an dem, dem Schaufelblatt 2 zugewandten Endbereich des Schaufelstieles 3 (Figur 4) oder in dem, dem Schaufelstiel 3 zugewandten Ende des Schaufelblattes 2 (Figur 5) angeordnet ist.

Dabei kann die Feder- und Dämpfungseinrichtung 4 in beliebiger Weise ausgestaltet sein. Beispielsweise kann sie gemäß der schematischen Darstellung der Figur 6 einen in den freien Endbereich 16 des Schaufelstiles 3 eingebrachten, im Wesentlichen in Längsrichtung des Schaufelstieles 3 verlaufenden Schlitz 18 umfassen, der den Endbereich 16 in zwei übereinander angeordnete Bereiche 17 und 19 unterteilt, wobei der Schlitz 18 etwa in einer Ebene parallel zur Ebene des Schaufelblattes 2 verläuft. Der Endbereich 16 ist dem Schaufelblatt 2 zugewandt.

Das Schaufelblatt 2 ist in der dargestellten Weise mit dem unteren Bereich 17 verbunden. Wenn daher das Schaufelblatt 2 in der Richtung des Pfeiles 20 beim Aufnehmen eines Wurfgutes durch einen Druck beaufschlagt wird, weitet sich der Schlitz 18 federnd auf (Rückfederung des Schaufelblattes 2 in Richtung des Pfeils 20), um nachfolgend bei einer Wurfbewegung zurück zu federn. Dadurch kann ein Wurfgut kräfteschonender aufgenommen werden und kann ein auf dem Schaufelblatt 2 bereits vorhandenes Wurfgut kraftschonender und auch weiter ausgeworfen werden.

Gemäß Figur 6 kann mit dem Bereich 17 ein den Endbereich 16 des Schaufelstiels ringförmig umgebendes Klammerteil 21 vorgesehen sein, das über den Umfang des Bereiches 19 vorsteht, um eine Druckfeder 22 zwischen dem Umfang des Bereiches 19 und dem entsprechenden Ende des Klammerteiles 21 aufzunehmen, derart, dass die Kraft der Druckfeder 22 senkrecht zur Längsrichtung des Schaufelstieles 3 verläuft. Durch ein Einstellglied 23, das beispielsweise die Form einer Einstellschraube aufweist, kann die Vorspannung der Druckfeder 22 vorteilhaft variiert werden.

### Bezugszeichenliste

- 1: Schaufelanordnung
- 2: Schaufelblatt
- 3: Schaufelstiel
- 4: Feder- und Dämpfungseinrichtung
- 5: Schweißnaht
- 6: Stielteil
- 7: Stielteil
- 9: Pfeil
- 10: Pfeil
- 11: Blattfederteil
- 12: Hülsenteil
- 13: Hülsenteil
- 14: Loch
- 15: Loch
- 16: Endbereich
- 17: Bereich
- 18: Schlitz
- 19: Bereich
- 20: Pfeil
- 21: Klammerteil
- 22: Druckfeder
- 23: Einstellglied

## Patentansprüche

1. Schaufelanordnung mit einem Schaufelblatt (2) und einem Schaufelstiel sowie einer Feder- und Dämpfungseinrichtung (4),
**dadurch gekennzeichnet,**
**dass** die Feder- und Dämpfungseinrichtung (4) federnde Auslenkungen des Schaufelblattes (2) in Bezug auf den Schaufelstiel in Richtungen (9, 10) etwa senkrecht zur. Ebene des Schaufelblattes (2) ermöglicht.

2. Schaufelanordnung nach Anspruch 1, **dadurch gekennzeichnet, dass** der Schaufelstiel (3) ein dem Schaufelblatt (2) zugewandtes Stielteil (6) und ein dem Schaufelteil (3) abgewandtes Stielteil (7) umfasst, wobei die Feder- und Dämpfungseinrichtung (4) zwischen den aneinander zugewandten Seiten des dem Schaufelblatt (2) zugewandten Stielteiles (6) und des dem Schaufelblatt (2) abgewandten Stielteiles (7) angeordnet ist.

3. Schaufelanordnung nach Anspruch 2, **dadurch gekennzeichnet, dass** die Feder- und Dämpfungseinrichtung (4) ein Blattfederteil (11) umfasst, das zwischen dem, dem Schaufelblatt (2) zugwandten Stielteil (6) und dem, dem Schaufelteil (2) abgewandten Stielteil (7) angeordnet ist und dass die Ebene des Blattfederteiles (11) im Wesentlichen parallel zur Ebene des Schaufelblattes (2) verläuft, wobei das Blattfederteil (11) aus einem Federstahlmaterial besteht.

4. Schaufelanordnung nach Anspruch 3, **dadurch gekennzeichnet, dass** das federnde Blattfederteil (11) mit seiner dem Schaufelblatt (2) zugewandten Seite an einem ersten Hülsenteil (12) befestigt ist, dass die dem , Schaufelteil (2) abgewandte Seite des Blattfederteiles (11) an einem zweiten Hülsenteil (13) befestigt ist, und dass das erste Hülsenteil (12) an dem, dem Schaufelblatt (2) zugewandten Stielteil (6) und das zweite Hülsenteil (13) an dem Schaufelblatt (2) abgewandten Stielteil (7) befestigbar sind.

5. Schaufelanordnung nach Anspruch 4, **dadurch gekennzeichnet, dass** das erste Hülsenteil (12) und/oder das zweite Hülsenteil (13) derart an den Querschnitt des dem Schaufelblatt (2) zugewandten Stielteiles (6) angepasst ist, dass es auf den ihm zugewandten Endbereich des dem Schaufelblatt (2) zugewandten Stielteiles (6) aufschiebbar ist

6. Schaufelanordnung nach einem der Ansprüche 4 oder 5, **dadurch gekennzeichnet, dass** das erste und/oder zweite Hülsenteil (6, 7) aus einem Stahlmaterial bestehen.

7. Schaufelanordnung nach Anspruch 6 in Verbindung mit Anspruch 6, **dadurch gekennzeichnet, dass** das erste Hülsenteil (12) und/oder das zweite Hülsenteil (13) an dem Blattfederteil (11) verschweißt sind.

8. Schaufelanordnung nach Anspruch 3, **dadurch gekennzeichnet, dass** das Blattfederteil (11) an seinen Enden Zapfenteile besitzt, die in Bohrungen der Enden der dem Blattfederteil (11) zugewandten Stielteile (6, 7) einsteckbar sind.

9. Schaufelanordnung nach Anspruch 1 oder 2, **dadurch gekennzeichnet, dass** die Feder- und Dämpfungseinrichtung (4) durch ein elastisches Materialteil gebildet ist, wobei das Materialteil ein Hartgummiteil ist und in dem Materialteil Verstärkungselemente angeordnet sind.

10. Schaufelanordnung nach Anspruch 9, **dadurch gekennzeichnet, dass** das Materialteil die Form eines Zylinders aufweist, wobei der Durchmesser des Zylinders an denjenigen der Stielteile angepasst ist.

11. Schaufelanordnung nach Anspruch 9 oder 10, **dadurch gekennzeichnet, dass** das Materialteil auf die ihm zugewandten Enden der Stielteile aufvulkanisiert ist.

12. Schaufelanordnung nach einem der Ansprüche 1 bis 11, **dadurch gekennzeichnet, dass** die Position der Feder- und Dämpfungseinrichtung (4) im Schaufelstiel (3) in Abhängigkeit von der gewünschten Hebelwirkung festgelegt ist.

13. Schaufelanordnung nach einem der Ansprüche 9 bis 12 in Verbindung mit Anspruch 1, **dadurch gekennzeichnet, dass** die Feder und Dämpfungseinrichtung (4) an dem, dem Schaufelblatt (2) zugewanden Ende des Schaufelstieles (3) angeordnet ist oder dass die Feder und Dämpfungseinrichtung (4) an dem Schaufelstiel (3) zugewanden Ende des Schaufelblattes (2) angeordnet ist.

14. Schaufelanordnung nach Anspruch 13, **dadurch gekennzeichnet, dass** die Feder und Dampfungseinrichtung (4) einen in den Schaufelstiel (3) eingebrachten, etwa in Längsrichtung verlaufenden Schlitz (18) umfasst, der den Endbereich (16) des Schaufelstieles (3) in einen oberen Bereich (19) und einen unteren Bereich (17) unterteilt, wobei der Schlitz (18) etwa in einer Ebenen parallel zur Ebene des Schaufelblattes (2) verläuft, und dass das dem Schaufelstiel (3) zugewandte Ende des Schaufelblattes (2) an dem unteren Bereich (17) befestigt ist.

15. Schaufelanordnung nach Anspruch 14, **dadurch gekennzeichnet, dass** ein den unteren Bereich (17) und den oberen Bereich (19) umgebendes Klammerteil (21) vorgesehen ist, das die federnde Aufweitung des Schlitzes (18) begrenzt, wobei das Klammerteil (21) an dem unteren Bereich (17) befestigt ist und dass zwischen dem oberen Bereich (19) und dem über diesen hinausragenden Ende des Klammerteiles eine Druckfeder (22) vorgesehen ist, die der Aufweitung des Schlitzes (18) federnd entgegenwirkt.
